# FASCICULE DE BREVET EUROPEEN

(11) **EP 1 764 245 B1**
(45) Date de publication et mention de la délivrance du brevet: **02.04.2008**
(21) Numéro de dépôt: 06119229.0
(22) Date de dépôt: 21.08.2006
(51) Int. Cl.: B60H 1/00

(54) **Appareil de chauffage, ventilation et/ou clilmatisation à acoustique améliorée**
Heizungs-, Lüftungs- und/oder Klimaanlage mit verbesserten akustischen Eigenschaften
Heating, ventilating and/or air conditioning device with improved acoustics

(30) Priorité: 20.09.2005 FR 0509578
(43) Date de publication de la demande: 21.03.2007
(73) Titulaire: Valeo Systèmes Thermiques, 78321 Le Mesnil St Denis Cedex (FR)
(72) Inventeur: Almori, Armelle c/o VALEO SYSTEMES THERMIQUES, 78310, Maurepas (FR); Stroehla, Ralph c/o VALEO KLIMASYSTEME GmgH, 96450 Coburg (DE)

(56) Documents cités:
- EP-A- 1 442 905
- EP-B- 1 470 011
- FR-A- 2 745 034
- US-B1- 6 178 764

## Description

La présente invention concerne les appareils de chauffage, ventilation et/ou climatisation. Plus particulièrement, elle vise l'amélioration de l'acoustique de tels appareils.

Les appareils de chauffage, ventilation et/ou climatisation comprennent, de façon générale, un groupe moto-ventilateur, des échangeurs de chaleur froids et chauds tels que des évaporateurs, des radiateurs et des chauffages électriques. Ils disposent également de moyens de répartition de flux d'air à l'intérieur d'un boîtier. L'ensemble de ces éléments sont générateurs de bruits provenant de la circulation de l'air dans des conduits ou à travers un échangeur, de la rotation du moteur entraînant le groupe moto-ventilateur et du déplacement de volets modifiant la répartition des flux d'air dans l'installation de chauffage, ventilation et/ou climatisation.

Ces volets sont sources de bruits notamment lors de leur déplacement de part leur mise en butée sur une paroi de l'appareil de chauffage, ventilation et/ou climatisation qui provoque généralement un claquement.

Il a été proposé de réduire ces nuisances sonores en agissant sur les sources de bruits. Ainsi, les volets ont été pourvus de lèvres en élastomère créant une fermeture étanche tout en atténuant les bruits de fermeture. De même, les structures et environnements des échangeurs de chaleur ont été modifiés pour diminuer la génération de vibrations et de bruits engendrés par le passage du fluide dans l'échangeur et de l'air au travers des intercalaires favorisant l'échange thermique.

De même, les groupes moto-ventilateurs ont été équipés d'amortisseurs permettant un découplage de ce sous-ensemble du reste de l'appareil de chauffage, ventilation et/ou climatisation et évitant ainsi une propagation importante de vibrations générées par la rotation du moteur.

Toutefois, de tels aménagements ne permettaient pas d'obtenir une parfaite isolation acoustique de l'installation de chauffage, ventilation et/ou climatisation. L'appareil en lui-même était source de bruits. Il a été proposé d'ajouter des éléments d'absorption acoustique à la structure du boîtier afin d'augmenter son isolation acoustique. De tels dispositifs sont notamment décrits dans la demande de brevet Allemand DE3639138 et dans le brevet Américain US6178764, qui est considéré comme l'art antérieur le plus proche.

Néanmoins, une telle solution est difficile à mettre en oeuvre et nécessite un process de moulage complexe faisant intervenir plusieurs sortes de matériaux. De plus, elle propose de remplacer une partie complète de l'appareil de chauffage, ventilation et/ou climatisation. Une telle étape rend difficile la standardisation de cette pièce.

L'objet de la présente invention est de surmonter les inconvénients précités. A cet effet, l'invention propose un appareil de chauffage, ventilation et/ou climatisation, notamment pour un habitacle de véhicule automobile, comprenant un boîtier comportant au moins un conduit ayant au moins une paroi canalisant un flux d'air dans le boîtier. La paroi du conduit comporte des ouvertures et une pièce d'absorption acoustique, qui est disposée à l'extérieur du conduit en contact avec les ouvertures réalisées dans la paroi du conduit, et est maintenue en place par un couvercle venant fermer de façon étanche le conduit.

Grâce à l'invention, on peut améliorer l'acoustique du groupe sans accroître le coût de l'ensemble. En effet, la pièce servant au maintien du matériau acoustique est issu du boîtier de chauffage, ventilation et/ou climatisation.

De plus, selon une première variante de réalisation, la pièce d'absorption acoustique est disposée dans un logement agencé à l'extérieur du conduit.

Le logement comporte des parois venant prendre appui sur des parois environnantes d'un habitacle de véhicule automobile. Ce logement est fermé de façon étanche par les parois environnantes de l'habitacle de véhicule automobile. Selon un autre de mode de réalisation, le logement est fermé de façon étanche par des couvercles latéraux.

Le couvercle venant fermer de façon étanche le conduit est relié à un élément de collecte des condensats de l'appareil. De façon préférentielle, le couvercle est assemblé au boîtier par des moyens d'attaches. En variante, le couvercle est lié au boîtier par une charnière film.

Selon un autre mode de réalisation, la pièce d'absorption acoustique est maintenue en place par un boîtier additionnel venant fermer de façon étanche le conduit. Ce boîtier additionnel est assemblé au boîtier par des moyens d'attaches.

De façon préférentielle, la pièce d'absorption acoustique est une couche de mousse à des pores ouverts. Alternativement, la pièce d'absorption acoustique est une couche de mousse à des pores fermés.

Selon un autre exemple de réalisation la paroi comportant des ouvertures est rapportée sur le boîtier. Selon un autre mode de réalisation, la paroi est issue de moulage avec le boîtier.

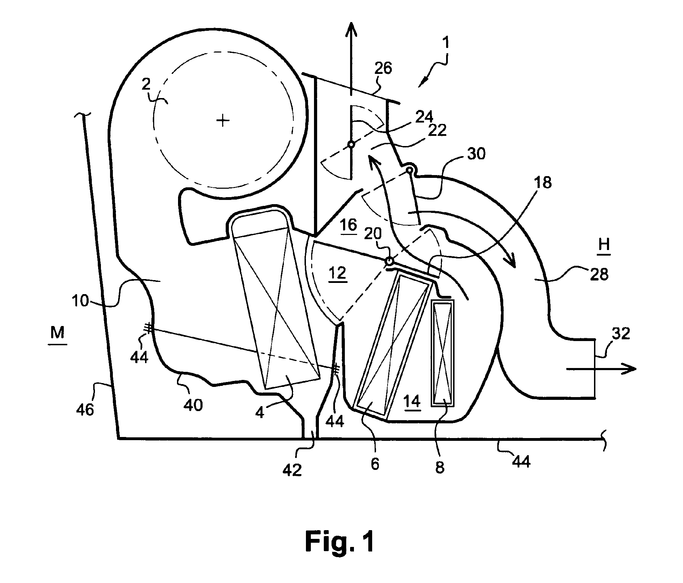

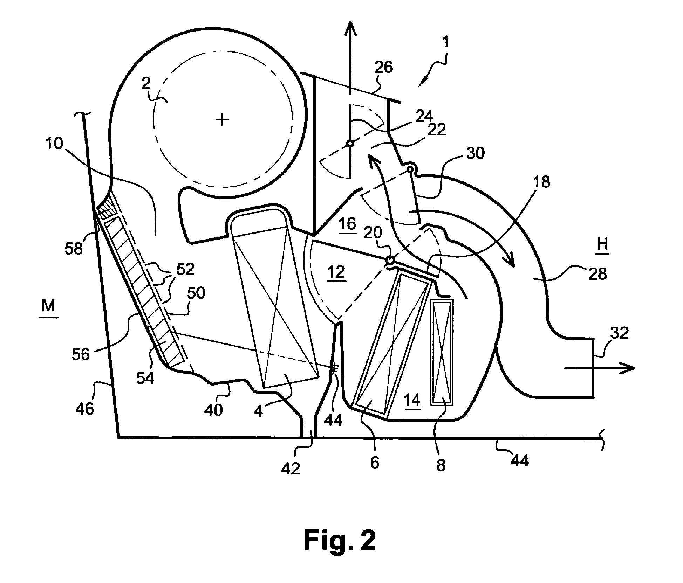

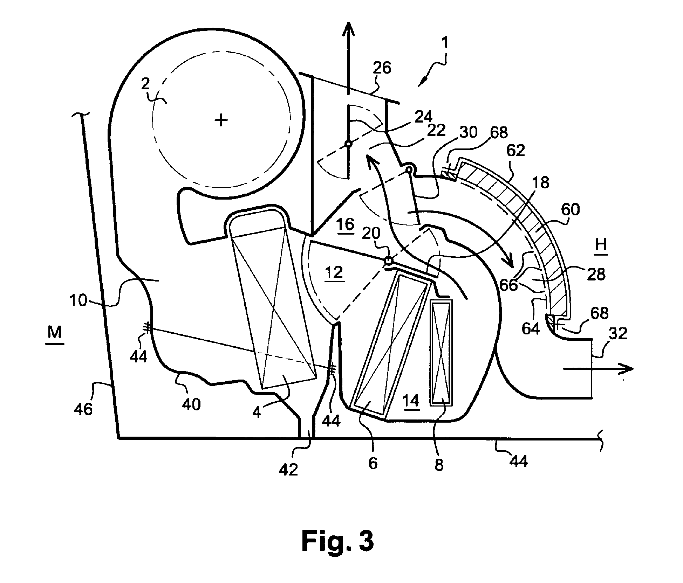

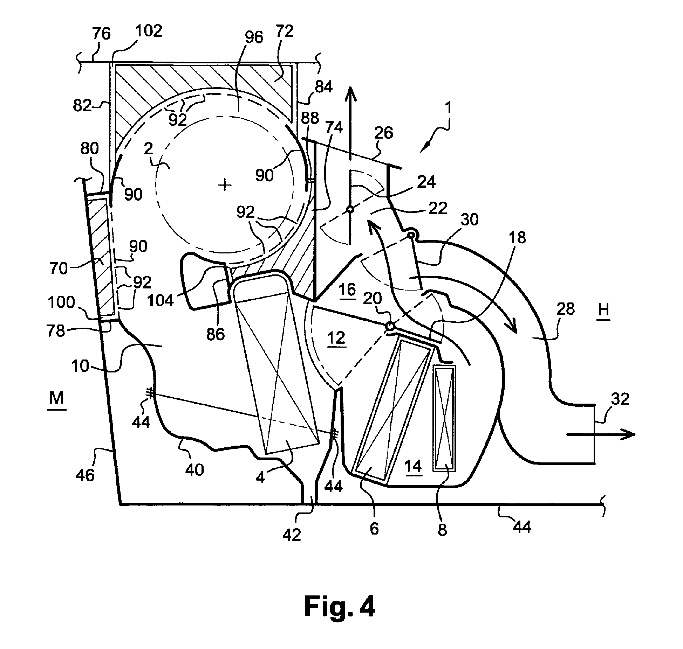

D'autres avantages et caractéristiques de l'invention apparaîtront à la lecture de la description qui suit. Cette description est purement illustrative et donnée à titre d'exemple et doit être lue en se référant aux dessins annexés sur lesquels on a représenté :
En figure 1, un appareil de chauffage, ventilation et/ou climatisation selon l'art antérieur,
En figure 2, un appareil de chauffage, ventilation et/ou climatisation selon un premier mode de réalisation de la présente invention,
En figure 3, un appareil de chauffage, ventilation et/ou climatisation selon un deuxième mode de réalisation de la présente invention, et
En figure 4, un appareil de chauffage, ventilation et/ou climatisation selon un troisième mode de réalisation de la présente invention.

On se réfère tout d'abord à la figure 1 qui représente une vue en coupe selon un plan vertical orienté dans la direction avant-arrière du véhicule d'un appareil de chauffage, ventilation et/ou climatisation selon l'état de la technique.

L'appareil de chauffage, ventilation et/ou climatisation comporte un boîtier 1. Il comprend en tant qu'éléments principaux de traitement d'air un groupe moto-ventilateur 2, constitué par un moteur et une turbine(non représentés), un évaporateur 4, un radiateur de chauffage 6 et une source de chaleur d'appoint 8 telle qu'une résistance électrique à coefficient de température positif.

Le boîtier 1 peut également comporter des moyens de filtration du flux d'air comme un filtre à particules, un filtre combiné ou un filtre photo catalytique. Ces éléments de filtration peuvent être disposés au niveau de l'entrée d'air (non représentée) de l'appareil en amont, selon le sens de déplacement de l'air, du groupe moto-ventilateur 2 ou entre le groupe moto-ventilateur 2 et l'évaporateur 4, en amont de ce dernier.

Le groupe moto-ventilateur 2 est disposé à la partie supérieure et vers l'avant (par rapport au sens de la marche du véhicule) du boîtier 1 et produit un flux d'air qui circule dans un conduit 10 situé à l'extrémité avant du boîtier conduisant l'air en sortie du groupe moto-ventilateur 2, puis circule sensiblement de l'avant vers l'arrière à travers l'évaporateur 4, avant de se répartir dans différents éléments de trajet.

Les éléments de trajet situés en aval de l'évaporateur 4 sont constitués par un conduit 12 canalisant une partie de l'air ayant traversé l'évaporateur 4 vers une zone de mixage 16. En parallèle du conduit 12, un conduit 14 canalise une partie de l'air ayant traversé l'évaporateur 4 vers le radiateur de chauffage 6 et la source d'appoint 8. De façon simplifiée, le conduit 12 est dit conduit froid et le conduit 14 est dit conduit chaud.

La répartition dans les conduits 12 et 14 est commandée par un volet 18. Selon l'exemple de réalisation, le volet 18 est de type papillon. Toutefois, il est également envisageable que des volets de types tambours et drapeaux soient utilisés pour assurer la fonction de répartition du flux d'air entre les conduits froids et chaud.

Un volet 18 est monté pivotant autour d'un axe transversal 20 s'étendant à travers le boîtier 1, de manière à se déplacer entre une première position extrême, représentée en trait plein, et une deuxième position extrême, représentée en trait interrompu.

Dans la première position extrême, les ailes du volet 18 libèrent respectivement l'entrée et la sortie du conduit 14 pour aboutir à une zone de mixage 16 située au- dessus du volet. Le volet 18, s'étendant sur toute la largeur du boîtier, obture le passage direct de l'évaporateur 4 à la zone 16.

Dans une deuxième position extrême, les ailes du volet 18 obturent respectivement l'entrée et la sortie du conduit 14. Le volet 18, s'étendant sur toute la largeur du boîtier, libère le passage direct de l'évaporateur 4 à la zone 16 pour aboutir à une zone de mixage 16.

Dans des positions intermédiaires du volet 18, les conduits 12 et 14 alimentent en proportion variable, la zone de mixage 16 en air chaud et en air froid permettant ainsi d'avoir un flux d'air résultant à température souhaitée.

A partir de la zone de mixage 16, des éléments de trajet 22 et 28 amènent l'air respectivement à des sorties 26 et 32 reliées respectivement à un ou plusieurs aérateurs de la zone avant de l'habitacle, aux buses de dégivrage, à un élément de trajet de la zone de pieds de la place avant du véhicule ou de la zone de pieds de la place arrière. Des volets pivotants 24 et 30 placés dans les éléments de trajet 22 et 32 permettent de régler les débits d'air parvenant aux sorties correspondantes.

La partie inférieure de l'appareil de chauffage, ventilation et/ou climatisation comporte un élément de collecte 40 des condensats résultant de la traversée du flux d'air à travers de l'évaporateur 4 et ruisselant depuis celui-ci. Ces condensats sont collectés par l'élément de collecte 40 et sont conduits vers une évacuation 42 communiquant avec l'extérieur par une ouverture pratiquée dans le plancher 44 du véhicule. Cet élément de collecte 40 assure également la fonction de support de l'évaporateur 4. Il peut également être utilisé comme support de moyens de filtration disposés en amont de l'évaporateur 4.

Afin de réaliser un ensemble étanche et cohérent, l'élément de collecte 40 est assemblé à l'appareil de chauffage, ventilation et/ou climatisation par des moyens d'attache 44. Ces moyens d'attaches 44 peuvent être réalisés par des vis, des clips métalliques, des clips en matières plastiques, ... Ces moyens d'attaches 44 peuvent être pris séparément ou en combinaison afin d'assurer l'assemblage de l'élément de collecte 40 à l'appareil de chauffage, ventilation et/ou climatisation.

De façon générale, l'appareil de chauffage, ventilation et/ou climatisation est disposé à l'intérieur de l'habitacle H d'un véhicule automobile. Plus particulièrement, il est disposé au dessus du plancher 44 du véhicule et à proximité de la paroi de séparation 46 entre le compartiment moteur M et l'habitacle H.

On se réfère dorénavant à la figure 2 qui représente une vue en coupe selon un plan vertical orienté dans la direction avant-arrière du véhicule d'un appareil de chauffage, ventilation et/ou climatisation selon un premier mode de réalisation de la présente invention.

L'appareil de la figure 2 reprend de nombreux éléments identiques à ceux décrits en relation avec la figure 1. En conséquence, ils seront identifiés par une référence commune.

L'appareil de chauffage, ventilation et/ou climatisation comporte un boîtier 1 et un élément de collecte 40 des condensats résultant de la traversée du flux d'air à travers l'évaporateur 4 et ruisselant depuis celui-ci.

Le boîtier 1 dispose d'un conduit 10 conduisant l'air en sortie du groupe moto-ventilateur 2 vers l'évaporateur 4. Selon une variante de réalisation de la présente invention, la paroi externe 50 du conduit 10 est ajourée par des ouvertures 52 permettant à l'air de passer du conduit 10 vers l'extérieur du conduit à travers la paroi externe 50.

Les ouvertures 52 peuvent être conçues à partir d'une grille, d'un maillage ou de trous circulaires réalisés dans la paroi externe 50 du conduit 10 créant ainsi une structure aérée. Néanmoins, ces ouvertures 52 peuvent être obtenues par tout autre agencement créant des espaces dans une surface telle que la paroi externe 50.

Il est également envisageable que la structure aérée soit réalisée sur une pièce rapportée qui est assemblée dans l'appareil de chauffage, ventilation et/ou climatisation en remplacement ou substitution de la paroi externe pleine de l'appareil tel que décrit en figure 1.

La paroi externe 50 pourvue d'ouvertures 52 coopère avec une pièce d'absorption acoustique 54 logée à l'extérieur du conduit 10 et accolée à la paroi externe 50.

La pièce 54 assure un revêtement isolant acoustique du conduit 10 en supprimant ou limitant la propagation de bruit vers l'extérieur du boîtier 1.

La pièce d'absorption acoustique 54 est maintenue en position contre la paroi externe 50 du boîtier 1 par un couvercle 56 venant insérer la pièce 54. Le couvercle 56 est assemblé avec le boîtier 1 de façon à assurer une étanchéité du conduit 10. Ainsi, l'air mis en mouvement par le groupe moto-ventilateur 2 est canalisé vers l'évaporateur 4 sans que les ouvertures 52 pratiquées dans la paroi externe 50 constituent des fuites.

Selon la présente invention, le couvercle 56 est en liaison avec l'élément de collecte 40. Il crée un prolongement de cet élément 40.

L'élément de collecte 40 est généralement de forme volumique. Il constitue un réceptacle faisant office de bac récoltant les condensats. Le couvercle 56 peut également être de forme volumique. Dans cette configuration, il constitue une partie complète du boîtier 1. Il est cependant envisageable que le couvercle 56 soit une surface venant clore une ouverture pratiquée dans le boîtier 1.

Quelles que soient les configurations envisagées pour le couvercle 56, il fait partie intégrante de l'élément de collecte 40. Ainsi, lors de l'assemblage de l'appareil de chauffage, ventilation et/ou climatisation, le couvercle 56 sera monté en même temps que l'élément de collecte 40. Une fois assemblée, la pièce d'absorption acoustique 54 est maintenue à l'intérieur du boîtier 1 et est protégée de l'extérieur par le couvercle 56. Cela évite tout risque de détérioration de la pièce d'absorption acoustique 54 lors du montage de l'appareil de chauffage, ventilation et/ou climatisation dans l'habitacle H du véhicule.

De plus, la pièce d'absorption acoustique 54, le couvercle 56 et le boîtier 1 sont des pièces distinctes qui viennent s'assembler entre elles. L'assemblage et la production des divers éléments sont simples puisque les parties du boîtier 1 et l'élément de collecte 40 ayant le couvercle 56 sont obtenus par moulage et sont réalisés en plastique.

Afin d'assurer le montage sur le boîtier de l'ensemble constitué par l'élément de collecte 40 et le couvercle 56, il est prévu des moyens d'attache assurant la mise en place et le maintien de cet ensemble avec le boîtier 1.

Il est possible d'utiliser les moyens d'attaches 44 prévus pour l'assemblage de l'élément de collecte 40 sur le boîtier 1. Il est également possible d'utiliser des éléments d'attache 58, propres au couvercle 56. Ces moyens d'attaches 58, à l'identique des moyens d'attaches 44, peuvent être réalisés par des vis, des clips métalliques, des clips en matières plastiques, ... Ces moyens d'attaches 58 peuvent être pris séparément ou en combinaison afin d'assurer l'assemblage de l'ensemble comprenant l'élément de collecte 40 et le couvercle 56 à l'appareil de chauffage, ventilation et/ou climatisation.

Dans l'exemple représenté, la pièce d'absorption acoustique 54 est une couche de mousse en polyuréthanne qui possède des pores ouverts. Préférentiellement, elle est imprégnée par un copolymère de vinylidène.

Afin de protéger la pièce d'absorption acoustique 54 contre la pénétration d'eau ou autres agents, il est prévu de munir la pièce 54 d'un film protecteur, étanche à l'eau, solidaire de la couche de mousse.

Selon un autre mode de réalisation, la pièce d'absorption acoustique 54 est une couche de mousse possédant des pores fermés. Ainsi, les performances acoustiques sont préservées quelque soit l'environnement.

La figure 3 présente une vue en coupe selon un plan vertical orienté dans la direction avant-arrière du véhicule d'un appareil de chauffage, ventilation et/ou climatisation selon un deuxième mode de réalisation de la présente invention.

L'appareil de la figure 2 reprend de nombreux éléments identiques à ceux décrits en relation avec les figures 1 et 2. En conséquence, ils seront identifiés par une référence commune.

L'appareil de chauffage, ventilation et/ou climatisation diffère de l'exemple décrit à la figure 2 par la localisation de la pièce d'absorption acoustique.

En effet, suivant les besoins d'isolation acoustique d'une partie spécifique de l'appareil de chauffage, ventilation et/ou climatisation, il est possible d'introduire une pièce d'absorption acoustique à proximité de la zone pour laquelle on souhaite diminuer le niveau de bruits.

Ainsi, l'exemple décrit en figure 3 présente une pièce d'absorption acoustique 60 coopèrant avec la paroi externe 64 du conduit 28 pourvue d'ouvertures 66. La pièce d'absorption acoustique 60 est logée à l'extérieur du conduit 28 et est accolée à la paroi externe 64.

Comme dans le conduit 10 décrit dans l'exemple de la figure 2, la paroi externe 64 du conduit 28 est ajourée par les ouvertures 66 permettant à l'air de passer du conduit 28 vers l'extérieur du conduit à travers la paroi externe 64.

Les ouvertures 66 peuvent être conçues par des méthodes similaires à celles assurant l'obtention des ouvertures 52.

De même, il est également envisageable que la paroi externe 64 soit réalisée sur une pièce rapportée qui est assemblée dans l'appareil de chauffage, ventilation et/ou climatisation en remplacement ou substitution de la paroi externe pleine de l'appareil tel que décrit en figure 1.

La pièce 60 assure un revêtement isolant acoustique du conduit 28 en supprimant ou limitant la propagation de bruits vers l'extérieur du boîtier 1.

La pièce d'absorption acoustique 60 est maintenue en position contre la paroi externe 64 du boîtier 1 par un boîtier additionnel 62 venant recouvrir la pièce 60. Le boîtier additionnel 62 est assemblé avec le boîtier 1 de façon à assurer une étanchéité du conduit 28. Ainsi, le flux d'air issu de la zone de mixage 16 est canalisé vers la sortie 32 sans que les ouvertures 66 pratiquées dans la paroi externe 64 constituent des fuites.

Afin d'assurer le montage sur le boîtier 1 du boîtier additionnel 62, il est prévu des moyens d'attache assurant la mise en place et le maintien de celui-ci.

Les moyens d'attaches sont similaires à ceux précédemment décrits. Il est possible d'utiliser les moyens d'attaches 44 prévus pour l'assemblage de l'élément de collecte 40 sur le boîtier 1. Il est également possible d'utiliser des éléments d'attache 68, propres au boîtier additionnel 62. Ces moyens d'attaches 68, à l'identique des moyens d'attaches 44 et 58, peuvent être réalisés par des vis, des clips métalliques, des clips en matières plastiques, ... Ces moyens d'attaches 68 peuvent être pris séparément ou en combinaison afin d'assurer l'assemblage du boîtier additionnel 62 à l'appareil de chauffage, ventilation et/ou climatisation.

Afin d'assurer pleinement sa fonction d'absorption acoustique, la pièce d'absorption acoustique 60 est une couche de mousse en polyuréthanne qui possède des pores ouverts. Préférentiellement, elle est imprégnée par un copolymère de vinylidène.

La pièce d'absorption acoustique 60 est similaire à la pièce d'absorption acoustique 54 et est réalisée à partir des mêmes matériaux. Elles possèdent les mêmes propriétés et caractéristiques.

La figure 4 présente une vue en coupe selon un plan vertical orienté dans la direction avant-arrière du véhicule d'un appareil de chauffage, ventilation et/ou climatisation selon un troisième mode de réalisation de la présente invention.

L'appareil de la figure 4 reprend de nombreux éléments identiques à ceux décrits en relation avec les figures 1 à 3. En conséquence, ils seront identifiés par une référence commune.

L'appareil de chauffage, ventilation et/ou climatisation diffère de l'exemple décrit aux figures 1 et 2 par la disposition de la pièce d'absorption acoustique et le mode de maintien de celle-ci.

En effet, les implantations et les agencements de l'appareil de chauffage, ventilation et/ou climatisation peuvent rendre difficile la réalisation de boîtiers additionnels ou de couvercles venant protéger la pièce d'absorption acoustique.

Comme le décrit l'exemple en figure 4, l'appareil de chauffage, ventilation et/ou climatisation présente des pièces d'absorption acoustique 70, 72 et 74 qui coopèrent avec la paroi 90 de la volute 96 entourant le groupe moto-ventilateur 2. La paroi 90 comporte des ouvertures 92. Les pièces d'absorption acoustique 70, 72 et 74 sont logées à l'extérieur de la volute 96 et sont accolées à la paroi 90 de la turbine.

Les ouvertures 92 sont similaires aux ouvertures 52 et 66 précédemment décrites. Elles sont obtenues et agencées de façons identiques à celles des ouvertures 52 et 66.

Les pièces 71, 72 et 74 assurent un revêtement isolant acoustique de la volute 96 du groupe moto-ventilateur 2 en supprimant ou limitant la propagation de bruits vers l'extérieur du boîtier 1.

Les pièces 71, 72 et 74 sont disposées à proximité immédiate d'une source principale de bruits au sein de l'appareil de chauffage, ventilation et/ou climatisation. Le rendu d'un tel agencement est donc amélioré puisqu'il intervient au plus proche des causes qu'elles combattent.

Les pièces d'absorption acoustique 71, 72 et 74 sont montées dans les logements 100, 102 et 104 comportant des parois 78, 80, 82, 84, 86 et 88. Les logements 100, 102 et 104 ne sont pas fermés. Ils servent de réceptacles pour les pièces d'absorption acoustique 71, 72 et 74.

Le maintien des pièces d'absorption acoustique 70, 72 et 74 est assurée a posteriori lors de l'assemblage de l'appareil de chauffage, ventilation et/ou climatisation dans l'habitacle H du véhicule. En effet, lors de la mise en place de l'appareil de chauffage, ventilation et/ou climatisation, les logements 100 et 102 viennent s'appuyer sur les parois environnantes 46 et 76. La paroi 46 est la paroi de séparation entre le compartiment moteur M et l'habitacle H. La paroi 76 est constituée par la paroi intérieure de la planche de bord de l'habitacle H du véhicule.

Ainsi, lorsque l'appareil de chauffage, ventilation et/ou climatisation est en place dans l'habitacle H, les logements 100 et 102 sont fermés et les pièces d'absorption acoustique 70 et 72 sont maintenues en position. Un tel agencement assure un assemblage étanche. Ainsi, le flux d'air généré par le groupe moto-ventilateur 2 est canalisé vers le conduit 10 sans que les ouvertures 92 pratiquées dans la paroi 90 de la volute 96 constituent des fuites.

De façon alternative, la pièce d'absorption acoustique 74 est insérée dans le logement 86, par exemple par glissement de la pièce d'absorption acoustique 74 dans l'espace séparant l'extérieur de la volute 96 du conduit 22 menant à la sortie 26. Dans une pareille configuration, il est nécessaire de prévoir des couvercles latéraux (non représentés) pour fermer la ou les ouvertures par la(les)quelle(s) la pièce d'absorption acoustique 74 a été insérée dans le logement 86. Ces couvercles additionnels servent à garantir l'étanchéité de l'appareil de chauffage, ventilation et/ou climatisation.

Dans cette variante de réalisation également, les pièces d'absorption acoustique 70, 72 et 74 sont des couches de mousse en polyuréthanne qui possèdent des pores ouverts. Préférentiellement, elles sont imprégnées par un copolymère de vinylidène.

Ces pièces d'absorption acoustique sont similaires aux pièces d'absorption acoustique 54 et 60 et sont réalisées à partir des mêmes matériaux. Elles possèdent les mêmes propriétés et caractéristiques.

Les divers modes de réalisation décrits précédemment diffère structurellement les uns des autres. Toutefois, il est envisageable de les employer séparément ou en combinaison les uns avec les autres afin d'obtenir les performances acoustiques recherchées.

De plus, certains types d'appareils, l'élément de collecte de condensats est directement intégré au boîtier de l'appareil de chauffage, ventilation et/ou climatisation. Dans de telles architectures, le logement entourant la pièce d'absorption acoustique est directement issu de moulage et fait partie intégrante du boîtier de l'appareil de chauffage, ventilation et/ou climatisation. Dans cet exemple de réalisation, le couvercle venant fermer le logement est également obtenu par moulage. Il est alors lié au boîtier de l'appareil de chauffage, ventilation et/ou climatisation par l'intermédiaire d'une charnière film.

De plus, les exemples de réalisation décrits précédemment intègrent des pièces d'absorption acoustique réalisées par des couches de mousse, tel que le polyuréthanne qui possèdent des pores ouverts.

Néanmoins, il est possible de remplacer ces couches de mousse à pores ouverts par des mousses à pores fermés. Identiquement, la présente invention couvre également les matériaux isolants acoustiques ayant des performances similaires voire meilleures que les mousses décrites précédemment.

La présente invention trouve une application particulière dans les installations de chauffage, ventilation et/ou climatisation de véhicules automobiles telles que décrites précédemment.

Bien évidemment, l'invention n'est pas limitée aux modes de réalisation décrits précédemment et fournis uniquement à titre d'exemple et englobe d'autres variantes de réalisation que pourra envisager l'homme du métier dans le cadre des revendications.

## Revendications

1. Appareil de chauffage, ventilation et/ou climatisation, pour un habitacle de véhicule automobile, comprenant un boîtier (1) comportant au moins un conduit (10, 28, 96) ayant au moins une paroi (50, 64, 90) canalisant un flux d'air dans le boîtier (1), ladite paroi (50, 64, 90) comportant des ouvertures (52, 66, 92) et au moins une pièce d'absorption acoustique (54, 60, 70, 72, 74) disposée à l'extérieur du conduit (10, 28, 96) en contact avec les ouvertures (52, 66, 92) **caractérisé en ce que** ladite pièce d'absorption acoustique est maintenue en place par un couvercle (56) venant fermer de façon étanche le conduit (10).

2. Appareil de chauffage, ventilation et/ou climatisation selon la revendications 1, dans lequel la pièce d'absorption acoustique (70, 72, 74) est disposée dans un logement (100, 102, 104) agencée à l'extérieur du conduit (10, 28, 96).

3. Appareil de chauffage, ventilation et/ou climatisation selon la revendication 2, dans lequel le logement (100, 102, 104) comporte des parois (78, 80, 82, 84, 86, 88) susceptibles de venir prendre appui sur les parois environnantes (46, 76) d'un habitacle H.

4. Appareil de chauffage, ventilation et/ou climatisation selon la revendication 3, dans lequel le logement (100, 102) est susceptible d'être fermé de façon étanche par les parois environnantes (46, 76) d'un habitacle H.

5. Appareil de chauffage, ventilation et/ou climatisation selon la revendication 3, dans lequel le logement (104) est fermée de façon étanche par des couvercles latéraux.

6. Appareil de chauffage, ventilation et/ou climatisation selon l'une des revendications 1 à 5, dans lequel le couvercle (56) est relié à un élément de collecte (40) des condensats de l'appareil.

7. Appareil de chauffage, ventilation et/ou climatisation selon la revendication 6, dans lequel le couvercle (56) est assemblé au boîtier (1) par des moyens d'attaches (58).

8. Appareil de chauffage, ventilation et/ou climatisation selon l'une des revendications 6 à 7, dans lequel le couvercle (56) est lié au boîtier (1) par une charnière film.

9. Appareil de chauffage, ventilation et/ou climatisation selon l'une des revendications 1 à 8, dans lequel la pièce d'absorption acoustique (60) est maintenue en place par un boîtier additionnel (62) venant fermer de façon étanche le conduit (28).

10. Appareil de chauffage, ventilation et/ou climatisation selon la revendication 9, dans lequel le boîtier additionnel (62) est assemblé au boîtier (1) par des moyens d'attaches (68).

11. Appareil de chauffage, ventilation et/ou climatisation selon l'une des revendications précédentes, dans lequel la pièce d'absorption acoustique (54, 60, 70, 72, 74) est une couche de mousse à des pores ouverts.

12. Appareil de chauffage, ventilation et/ou climatisation selon l'une des revendications 1 à 10, dans lequel la pièce d'absorption acoustique (54, 60, 70, 72, 74) est une couche de mousse à des pores fermés.

13. Appareil de chauffage, ventilation et/ou climatisation selon l'une des revendications précédentes, dans lequel la paroi (50, 64, 90) est rapportée sur le boîtier (1).

14. Appareil de chauffage, ventilation et/ou climatisation selon l'une des revendications 1 à 12, dans lequel la paroi (50, 64, 90) est issue de moulage avec le boîtier (1).

## Claims

1. Heating, ventilating and/or air conditioning device, for a motor vehicle cabin, comprising a box (1) comprising at least one duct (10, 28, 96) having at least one wall (50, 64, 90) channelling an air flow into the box (1), the said wall (50, 64, 90) comprising openings (52, 66, 92) and at least one acoustic absorption component (54, 60, 70, 72, 74) disposed outside the duct (10, 28, 96) in contact with the openings (52, 66, 92), **characterized in that** the said acoustic absorption component is held in place by a cover (56) that closes the duct (10) in a leaktight manner.

2. Heating, ventilating and/or air conditioning device according to Claim 1, in which the acoustic absorption component (70, 72, 74) is disposed in a housing (100, 102, 104) arranged outside the duct (10, 28, 96).

3. Heating, ventilating and/or air conditioning device according to Claim 2, in which the housing (100, 102, 104) comprises walls (78, 80, 82, 84, 86, 88) capable of coming to bear on the surrounding walls (46, 76) of a cabin H.

4. Heating, ventilating and/or air conditioning device according to Claim 3, in which the housing (100, 102) is capable of being closed in a leaktight manner by the surrounding walls (46, 76) of a cabin H.

5. Heating, ventilating and/or air conditioning device according to Claim 3, in which the housing (104) is closed in a leaktight manner by lateral covers.

6. Heating, ventilating and/or air conditioning device according to one of Claims 1 to 5, in which the cover (56) is linked to an element (40) for collecting the condensates of the device.

7. Heating, ventilating and/or air conditioning device according to Claim 6, in which the cover (56) is assembled to the box (1) by clasp means (58).

8. Heating, ventilating and/or air conditioning device according to one of Claims 6 to 7, in which the cover (56) is tied to the box (1) by a film hinge.

9. Heating, ventilating and/or air conditioning device according to one of Claims 1 to 8, in which the acoustic absorption component (60) is held in place by an additional box (62) that closes the duct (28) in a leaktight manner.

10. Heating, ventilating and/or air conditioning device according to Claim 9, in which the additional box (62) is assembled to the box (1) by clasp means (68).

11. Heating, ventilating and/or air conditioning device according to one of the preceding claims, in which the acoustic absorption component (54, 60, 70, 72, 74) is a layer of open-pore foam.

12. Heating, ventilating and/or air conditioning device according to one of Claims 1 to 10, in which the acoustic absorption component (54, 60, 70, 72, 74) is a layer of closed-pore foam.

13. Heating, ventilating and/or air conditioning device according to one of the preceding claims, in which the wall (50, 64, 90) is added on to the box (1).

14. Heating, ventilating and/or air conditioning device according to one of Claims 1 to 12, in which the wall (50, 64, 90) is moulded together with the box (1).

## Patentansprüche

1. Heiz-, Belüftungs- und/oder Klimaanlagengerät für eine Fahrgastzelle eines Kraftfahrzeugs mit einem Gehäuse (1), das mindestens eine Leitung (10, 28, 96) aufweist, die mindestens eine Wand (50, 64, 90) hat, die einen Luftstrom in dem Gehäuse (1) kanalisiert, wobei die Wand (50, 64, 90) Öffnungen (52, 66, 92) und mindestens einen Schallabsorptionsteil (54, 60, 70, 72, 74) aufweist, der außerhalb der Leitung (10, 28, 96) in Berührung mit den Öffnungen (52, 66, 92) angeordnet ist, **dadurch gekennzeichnet, dass** der Schallabsorptionsteil von einem Deckel (56), der die Leitung (10) dicht schließt, gehalten wird.

2. Heiz-, Belüftungs- und/oder Klimaanlagengerät nach Anspruch 1, bei dem der Schallabsorptionsteil (70, 72, 74) in einer Aufnahme (100, 102, 104) untergebracht ist, die außerhalb der Leitung (10, 28, 96) eingerichtet ist.

3. Heiz-, Belüftungs- und/oder Klimaanlagengerät nach Anspruch 2, bei dem die Aufnahme (100, 102, 104) Wände (78, 80, 82, 84, 86, 88) aufweist, die auf den umgebenden Wänden (46, 76) einer Fahrgastzelle H zum Aufliegen kommen können.

4. Heiz-, Belüftungs- und/oder Klimaanlagengerät nach Anspruch 3, bei dem die Aufnahme (100, 102) von den umgebenden Wänden (46, 76) einer Fahrgastzelle H dicht verschlossen werden kann.

5. Heiz-, Belüftungs- und/oder Klimaanlagengerät nach Anspruch 3, bei dem die Aufnahme (104) von seitlichen Deckeln dicht verschlossen ist.

6. Heiz-, Belüftungs- und/oder Klimaanlagengerät nach einem der Ansprüche 1 bis 5, bei dem der Deckel (56) mit einem Sammelelement (40) der Kondensate des Geräts verbunden ist.

7. Heiz-, Belüftungs- und/oder Klimaanlagengerät nach Anspruch 6, bei dem der Deckel (56) mit dem Gehäuse (1) durch Befestigungsmittel (58) zusammengebaut ist.

8. Heiz-, Belüftungs- und/oder Klimaanlagengerät nach einem der Ansprüche 6 bis 7, bei dem der Deckel (56) mit dem Gehäuse (1) durch ein Folienscharnier verbunden ist.

9. Heiz-, Belüftungs- und/oder Klimaanlagengerät nach einem der Ansprüche 1 bis 8, bei dem der Schallabsorptionsteil (60) von einem zusätzlichen Gehäuse (62), das die Leitung (28) dicht verschließt, gehalten wird.

10. Heiz-, Belüftungs- und/oder Klimaanlagengerät nach Anspruch 9, bei dem das zusätzliche Gehäuse (62) mit dem Gehäuse (1) durch Befestigungsmittel (68) zusammengebaut ist.

11. Heiz-, Belüftungs- und/oder Klimaanlagengerät nach einem der vorhergehenden Ansprüche, bei dem der Schallabsorptionsteil (54, 60, 70, 72, 74) eine offenzellige Schaumstoffschicht ist.

12. Heiz-, Belüftungs- und/oder Klimaanlagengerät nach einem der Ansprüche 1 bis 10, bei dem der Schallabsorptionsteil (54, 60, 70, 72, 74) eine geschlossenzellige Schaumstoffschicht ist.

13. Heiz-, Belüftungs- und/oder Klimaanlagengerät nach einem der vorhergehenden Ansprüche, bei dem die Wand (50, 64, 90) an das Gehäuse (1) angebaut ist.

14. Heiz-, Belüftungs- und/oder Klimaanlagengerät nach einem der Ansprüche 1 bis 12, bei dem die Wand (50, 64, 90) aus dem Formen mit dem Gehäuse (1) gebildet ist.
